# EUROPÄISCHE PATENTANMELDUNG

(11) **EP 2 275 636 A2**
(43) Veröffentlichungstag der Anmeldung: **19.01.2011**
(21) Anmeldenummer: 10007079.6
(22) Anmeldetag: 09.07.2010
(51) Int. Cl.: E06B 1/02, E06B 3/06

(54) **Profilelement zum Fertigen eines Tür- oder Fensterrahmens**

(30) Priorität: 09.07.2009 DE 102009032312
(71) Anmelder: Noblesse Türfüllungen GmbH & Co. KG, 76768 Berg/Pfalz (DE)
(72) Erfinder: Berizzi, Hans Heinrich, 76768 Berg (DE)
(74) Vertreter: Müller-Gerbes Wagner Albiger Patentanwälte

(57) **Zusammenfassung**

Profilelement (1,2) zum Fertigen insbesondere eines ein oder mehrere Profilelemente (1,2) umfassenden Tür- oder Fensterrahmens (3) oder dergleichen, wobei das Profilelement mehrere Profilwandungen aufweist, wobei das Profilelement (1,2) zwei einen Winkel einschließende Schenkel (4,5) aufweist, welche in einem Eckbereich miteinander verbunden sind, wobei sich zumindest eine Profilwandung von Schenkel (4) zu Schenkel (5) nahtlos und/oder fugenlos über den Eckbereich erstreckt.

## Beschreibung

Die Erfindung betrifft ein Profilelement zum Fertigen eines insbesondere aus mehreren Profilelementen zusammengesetzten Tür- oder Fensterrahmens.

Profilelemente sowie hieraus gefertigte Tür- oder Fensterrahmen und somit auch Türen oder Fenster sind aus dem Stand der Technik in den unterschiedlichsten Formen und Farben bereits bekannt.

So offenbart beispielsweise die Offenlegungsschrift DE 100 06 612 A1 ein Kunststoffprofil als tragendes Element eines Türprofils, welches aus mehreren extrudierten Hohlprofilelementen zusammengesetzt ist. Die Hohlprofilelemente werden hierzu an ihren Enden auf Gehrung geschnitten, wobei in den Eckbereichen des Türprofils zusätzlich noch Verstärkungswinkel eingesetzt werden können, um dem jeweiligen Fensterflügel- oder Blendrahmen- oder Türprofil eine ausreichende Stabilität zu verleihen. Das Kunststoffprofil weist mehrere Profilwandungen auf, welche eine Kammer umschließen. Die Kammer nimmt einen Kern aus geschäumtem Kunststoff auf. In den jeweiligen Endabschnitten des Profils sind zwischen dem Schaumkern und dessen Außenwandung Aufnahmetaschen insbesondere für die Verstärkungswinkel vorgesehen. Hierdurch sollen bereits bekannte gattungsgemäße Kunststoffprofile hinsichtlich ihres Wärmedurchlässigkeitsbeiwertes, ihrer Steifigkeit bzw. ihrer Verbindbarkeit verbessert werden können.

Auch die Lehre der Offenlegungsschrift DE 103 19 747 A1 befasst sich mit einem Verbundprofil für die Verstärkung eines Kunststoffhohlprofilstabes für die Herstellung von Blend- oder Flügelrahmen von Fenstern oder Türen. Das Verbundprofil besteht aus einem Kunststoffprofil mit in eine Kunststoffmatrix form- und kraftschlüssig eingelagerten Verstärkungen. Die Verstärkungen bestehen aus Metall oder nichtmetallischen Werkstoffen. Hierdurch soll einerseits ein Wärmeübergang durch das bestehende Verbundprofil reduziert und andererseits das Verbundprofil verstärkt werden.

Es ist Aufgabe vorliegender Erfindung, verbesserte Profilelemente zum Fertigen eines Tür- oder Fensterrahmens bereitzustellen, welche insbesondere verwindungssteif sind und sehr gute wärmeisolierende Eigenschaften aufweisen.

Die Aufgabe der Erfindung wird von einem Profilelement zum Fertigen eines oder mehrere Profilelemente umfassenden Tür- oder Fensterrahmens gelöst, wobei das Profilelement mehrere Profilwandungen aufweist. Das Profilelement umfasst zwei einen Winkel einschließende Schenkel, welche in einem Eckbereich miteinander verbunden sind, wobei sich zumindest eine Profilwandung von Schenkel zu Schenkel nahtlos und/oder fugenlos über den Eckbereich erstreckt.

Mit dem erfindungsgemäßen Profilelement lässt sich nicht nur ein Türrahmen, sondern auch ein Fensterrahmen oder auch ein ähnlicher Rahmen wie ein Seitenteil für eine Tür oder ein Oberlicht fertigen. Daher soll der Begriff "Türrahmen" im Folgenden weit ausgelegt werden und Rahmen für ähnliche oder andere Zwecke mit beinhalten.

Die nahtlose oder auch einstückige Form wenigstens einer Profilwandung im Eckbereich zwischen zwei Schenkeln verleiht dem Tür- oder Fensterrahmen eine besondere Verwindungssteifigkeit. Somit ist es möglich, den Eckbereich ohne zusätzliche Winkel oder Verstärkungswinkel auszustatten, da die Verbindung der Schenkel im Eckbereich über die sich über den Eckbereich erstreckende Profilwandung erfolgt, welche entsprechende Momente aufnehmen kann. Es können auch mehrere Profilwandungen oder auch alle Profilwandungen sich über den Eckbereich erstrecken.

Da für die Verwindungssteifigkeit des Tür- oder Fensterrahmens nicht notwendigerweise zusätzliche Bauteile wie Verstärkungswinkel notwendig sind, lässt sich der Eckbereich hinsichtlich einer Reduzierung des Wärmeübergangs in einfacher Weise optimieren, da durch Wegfall der zusätzlichen Bauteile auch entsprechende Wärmebrücken wegfallen.

Das Profilelement kann ein Schalenteil und ein Deckelteil umfassen, wobei sich das Schalenteil und/oder das Deckelteil nahtlos über den Eckbereich erstrecken.

Durch zwei unterschiedlich zueinander orientierte Schenkel, welche vorzugsweise rechtwinklig zueinander sind und unterschiedlich lang ausgebildet sein können, kann ein Tür- oder Fensterrahmen ohne Stoßkanten in dessen Eckbereichen ausgeführt werden. Vorzugsweise ist das Profilelement L-förmig ausgestaltet. Vorzugsweise ist der längere Schenkel ein vertikaler Schenkel und der kurze Schenkel ein horizontaler Schenkel.

Es versteht sich, dass das erfindungsgemäße Profilelement nicht nur an den unterschiedlichsten Türen eingesetzt werden kann, wie insbesondere Hausabschlusstüren oder Wohnungsabschlusstüren, sondern darüber hinaus auch beispielsweise an Fenstern oder im Zusammenhang zum Realisieren von einfachen Blendrahmen. Zudem wird der Begriff "Türrahmen" auch synonym für eine Türzarge verwendet.

In diesem Zusammenhang wird die Aufgabe der Erfindung auch von einem Tür-oder Fensterrahmen, insbesondere für Haus- oder Wohnungsabschlusstüren, aus wenigstens zwei, insbesondere genau zwei oder mehrere, miteinander verbundenen Profilelementen gelöst, wobei der Türrahmen gehrungsfrei und/oder stoßkantenfrei ausgestaltet ist. Durch die Verwendung von genau zwei Profilelementen wird der Aufbau und damit die Montage erleichtert. Die Stabilität kann erhöht sein

Bei herkömmlichen Tür- oder Fensterrahmen, bei welchen die Profilelemente in Eckbereichen des Rahmens auf Stoß gesetzt sind und in der Regel mit einer Gehrung versehen sind, kommt es häufig in den Eckbereichen zu Verbindungsproblemen, da die zu verbindenden Profilelemente an ihren Stoßkanten nicht immer ausreichend verdrehsicher miteinander verbunden werden können. Insbesondere dies kann zu Festigkeits- beziehungsweise Stabilitätsproblemen an den Rahmen führen, wobei im Falle einer ungünstigen Belastung des Rahmens es im Gehrungsbereich sogar zu einer Spaltbildung kommen kann.

Eine vorteilhafte Weiterbildung des Tür- oder Fensterrahmens sieht vor, dass der Rahmen lediglich aus zwei Profilelementen gebildet ist, wobei ein rechtes Profilelement und ein linkes Profilelement spiegelverkehrt ausgestaltet sind. Auf Grund der wenigen Profilelemente, welche zu einem Tür- oder Fensterrahmen zusammengesetzt werden müssen, kann eine Montage schneller vorgenommen werden. Ein Stoßbereich beider Profilelemente, an der die Profilelemente miteinander verbunden werden, ist dabei vorzugsweise mittig angeordnet. Hierdurch kann der Abstand des Stoßbereichs zu Ecken des Rahmens maximiert werden. Da die Belastung des Türrahmens mit steigendem Abstand von den Ecken abnimmt kann die Stabilität der Verbindung beider Profilelemente und damit auch des Rahmens erhöht sein.

Um derartige, spiegelverkehrte Profilelemente als Tür- oder Fensterrahmenhälften miteinander vorteilhaft zu einem Tür- oder Fensterrahmen verbinden zu können, werden vorteilhafter Weise jeweils ein linkes Profilelement und ein rechtes Profilelement hergestellt, wobei die beiden jeweiligen Rahmenhälften auf ein Breitenmaß des Rahmens zugeschnitten und an einem einzigen Profilstoß aneinander gestoßen werden können. Im Bereich dieses Profilstoßes kann dann mit einer gleichen oder ähnlichen Harz-Glasfaser-Mischung eine stabile, haltbare Verklebung der beiden Profilelemente erzielt werden. Nach dem Aushärten kann der Profilstoß im Wesentlichen genauso massiv sein, wie aus einem Stück ausgebildet.

Die beiden bodenseitigen Enden des derart hergestellten Tür- oder Fensterrahmens können anschließend ebenfalls passgenau auf die fertige Türrahmenhöhe zugeschnitten werden, wenn die jeweils längeren Schenkel der Profilelemente entsprechend in Überlänge ausgestaltet sind.

Zum Fertigen eines normalen rechteckigen Tür- oder Fensterrahmens ist es besonders vorteilhaft, wenn das Profilelement zwei rechtwinklig zueinander angeordnete Schenkel aufweist. Insofern kann mittels des erfindungsgemäßen Profilelements ein Winkelelement bereitgestellt werden.

Da die meisten Rahmen höher als breit ausgestaltet sind, ist es vorteilhaft, wenn das Profilelement hierbei einen längeren und einen kürzeren Schenkel aufweist, sodass das Profilelement in vorteilhafter Weise L-förmig ausgestaltet ist. Somit lässt sich der Rahmen dann lediglich durch diese zwei L-förmigen Profilelemente zusammensetzen, indem die kurzen Schenkel der Profilelemente so abgelängt werden, dass die Summe der Längen der beiden kurzen Schenkel der Breite des Rahmens entspricht.

Vorzugsweise bildet der länger ausgeführte Schenkel einen im Wesentlichen vertikal ausgerichteten Bereich eines Rahmens, während der kürzere Schenkel des Profilelements eher einen im Wesentlichen horizontal ausgerichteten Bereich des Rahmens bildet.

Das vorliegende Profilelement kann auf vielfältige Weise hergestellt werden. Es hat sich in der Praxis jedoch gezeigt, dass es besonders vorteilhaft hergestellt werden kann, wenn das Profilelement ein Schalenteil und vorzugsweise ein Deckelteil aufweist. Teile des Profilelements, nämlich insbesondere das Schalenteil und/oder das Deckelteil, können aus faserverstärktem Kunststoff hergestellt sein. Die Verstärkung kann Glasfaser, Kohlefaser, Kevlarfaser bzw. Mittel umfassen, die vorzugsweise in der Kunststoffmatrix gut eingebettet sind und hohe Festigkeitswerte und/oder hohe Steifigkeiten aufweisen.

Speziell ein Schalenteil aus einem faserverstärkten Kunststoff lässt sich besonders einfach derart formen, dass selbst rechtwinklig zueinander angeordnete Schenkel des Schalenteils nahtlos ineinander übergehen können, sodass das Schalenteil entlang seiner Längserstreckung einstückig ausgebildet werden kann. Hierdurch kann das Schalenteil entlang seiner gesamten Längserstreckung einen besonders homogenen und durchgehend gleichmäßigen Materialaufbau erhalten, wodurch an dem Profilelement eine besonders gute Steifigkeit erzielt werden kann. Gleiches gilt im Übrigen auch für das Deckelteil, sofern ein solches vorgesehen ist.

Das Schalenteil ist vorzugsweise im Wesentlichen U-förmig ausgebildet, insbesondere im Querschnitt betrachtet. Dabei können zwei seitliche Profilwandungen des U's im Wesentlichen parallel zu einer Rahmenöffnung verlaufen. Die seitlichen Profilwandungen können durch eine Basis miteinander verbunden sein. Diese seitlichen Profilwandungen können die innenliegende Begrenzung und die außenliegende Begrenzung des Rahmens darstellen. Die Basis kann einem Türblatt zugewandt sein. Insbesondere an der Basis können Beschläge und Dichtmittel angebracht sein. Durch die U-förmige Ausbildung können die innenseitige Begrenzung, die außenseitige Begrenzung sowie die Basis, an die eine Tür oder Fenster angrenzen können, einstückig ausgebildet sein. Zugleich kann aber der Hohlraum von einer Seite zugänglich bleiben, nämlich der Seite, an der der entstehende Rahmen an einer Wandöffnung befestigt wird. Die Öffnung des U's kann zwar die schwächste Stelle des Profilelements darstellen; wenn aber diese Öffnung dann z.B. an einer Wand anliegt, kann diese Schwachstelle durch die Wand kompensiert werden. Die Schichten eines mehrschichtigen Kernteils sind vorzugsweise nebeneinander angeordnet, wodurch eine bessere Funktionstrennung ermöglicht sein kann.

In einer bevorzugten Ausgestaltung weist das U-förmige Schalenteil eine Zwischenwandung auf, die im Wesentlichen parallel zu seitlichen Wandungen des Schalenteils ausgerichtet ist. Die Zwischenwandung kann eine Trennung zwischen zwei Schichten sein, die innerhalb des Profilelements angeordnet sind. Solche Schichten können eine wärmeisolierende Wirkung und/oder eine stabilisierende Wirkung haben. Die Zwischenwandung kann Bestandteil eines mehrschichtigen Kernteils sein, wobei der mehrschichtige Aufbau durch die Schichten und die dazwischen liegende Zwischenwandung gebildet sein kann.

Die Zwischenwandung kann auch eine stabilisierende Wirkung haben. Insbesondere in einem mehrschichtigen Aufbau mit einer stabilisierenden Schicht kann sich eine deutlich erhöhte Gesamtfestigkeit ergeben, die die Summe der Einzelfestigkeiten, jeweils gebildet aus Zwischenwandung und stabilisierende Schicht, übersteigen kann. Die Zwischenwandung kann als Auflage für das Deckelteil dienen. Das Schalenteil kann eine doppelte U-Form aufweisen. Die doppelte U-Form kann durch die seitlichen Wandungen, die Basis und die Zwischenwandung gebildet sein.

Insofern wird die Aufgabe der Erfindung auch von einem Verfahren zum Herstellen eines Profilelements zum Fertigen eines Rahmens gelöst, bei welchem für das Profilelement ein Schalenteil mit einem seitlich zugänglichen Hohlraum hergestellt wird.

Der Begriff "Schalenteil" beschreibt vorliegend ein Gebilde, welches eine Außenhaut des Profilelements bilden kann, wobei das Gebilde entlang der Längserstreckung des Profilelements im Wesentlichen halbseitig geöffnet ist, sodass ein von dem Schalenteil schalenförmig ausgebildeter Hohlraum idealerweise entlang des gesamten Gebildes seitlich zugänglich ist.

Ein derartiges Schalenteil und/oder ein Deckelteil des Profilelements kann auf unterschiedlichste Weise hergestellt werden. Vorzugsweise kann hierzu ein Harz-Glasfaser-Gemisch in eine entsprechend profilgebende Form eingebracht bzw. eingegossen werden, welches dann in der profilgebenden Form aushärtet, wodurch ein festes, stabiles und zudem leichtes Schalenteil hergestellt werden kann. Die profilgebende Form kann einseitig mit einer 90°-Ecke versehen werden, sodass das darin hergestellte Profilelement idealerweise sogleich einem halben Tür- oder Fensterrahmen entspricht.

Hierbei ist es vorteilhaft, wenn Bereiche des Profilelements, insbesondere das Schalenteil und/oder das Deckelteil des Profilelements, aus einem Sheet-Molding-Compound, kurz SMC genannt, einem Bulk-Molding-Compound, kurz BMC genannt, oder einem Handlaminat hergestellt sind.

Der Begriff "Sheet-Molding-Compound" bezeichnet im Wesentlichen teigartige Pressmassen aus duroplastischen Reaktionsharzen und Glasfasern zur Herstellung eines entsprechenden Faser-Kunststoff-Verbundes. In einem solchen SMC liegen alle erforderlichen Komponenten idealerweise vollständig vorgemischt und somit fertig zur Verarbeitung vor. In der Regel werden Polyester- oder Vinylesterharze verwendet. Die Verstärkungsfasern liegen meistens in Mattenform seltener in Gewebeform vor, wobei deren typische Faserlänge 25 mm bis 50 mm beträgt. Weitere Eigenschaften und Bezeichnungen von SMC sind in der DIN EN 14598 geregelt.

Somit sieht eine zusätzliche Verfahrensvariante vor, dass das Schalenteil mittels eines Sheet-Molding-Compound-Verfahrens hergestellt wird.

Der Begriff "Bulk-Molding-Compound" beschreibt ein Faser-Matrix-Halbzeug, welches zumeist aus Kurz-Glasfasern und einem Polyester- oder Vinylesterharz besteht. Andere Verstärkungsfasern oder Harzsysteme sind möglich. Beispielsweise kommen preiswertere Naturfasern zunehmend zum Einsatz. Gegenüber einem reinen Harz zeichnet sich auch das BMC durch eine höhere Festigkeit, Steifigkeit und durch höhere Temperatureinsatzgrenzen aus. BMC wird vorzugsweise im Heißpressverfahren verarbeitet, was extrem kurze Taktzeiten ermöglicht. Die BMC-Masse wird dazu in der Regel zentral in ein beheiztes, geteiltes Werkzeug eingelegt. Beim Schließen verteilt sich das BMC im Werkzeug. Durch kürzere Faserlängen können beim Pressen auch dünnere Wanddicken gut gefüllt werden.

Insofern kann das Schalenteil auch mittels eines Bulk-Molding-Compound-Verfahrens vorteilhaft hergestellt werden, wodurch insbesondere extrem kurze Taktzeiten erzielt werden können.

Der Begriff "Handlaminat" bezeichnet im Wesentlichen ein Bauteil aus faserverstärktem Kunststoff, wobei eine Negativform des herzustellenden Bauteils, das gewünschte Fasergewebe, beispielsweise Glasfasermatten, und die Matrix, etwa ein Epoxydharz, erforderlich sind. Beide Materialien werden hierbei meist händisch abwechselnd in der Form verteilt, wobei auf eine gute Durchmischung der beiden Komponenten geachtet werden sollte und die Fasern ohne Lufteinschlüsse mit der Matrix getränkt werden müssen, um hierdurch eine besonders erhöhte Festigkeit erzielen zu können. Ein Aushärten der miteinander vermischten Materialien kann entweder kalt an der Umgebungsluft oder heiß im Härteofen erfolgen. Durch ein heißes Aushärten im Härteofen werden oftmals höhere Festigkeiten erreicht und der Aushärtungsvorgang kann schneller erfolgen.

Eine alternative Verfahrensvariante sieht demnach auch vor, dass das Schalenteil mittels eines Handlaminat-Verfahrens hergestellt wird.

Weitere besonders hervorzuhebende Merkmale und Eigenschaften können an dem Profilelement erzielt werden, wenn das Profilelement ein mehrschichtiges Kernteil aufweist.

Die Bezeichnung "mehrschichtiges Kernteil" beschreibt ein Kernteil, welches aus mehr als einem Werkstoff besteht. Vorzugsweise sind die einzelnen Schichten des Kernteils unlösbar miteinander verbunden, sodass das mehrschichtige Kernteil eine kompakte Einheit innerhalb des Profilelements darstellt. Insofern können in vorteilhafter Weise die jeweils besonderen Eigenschaften der Werkstoffe auf baulich außergewöhnlich unkomplizierte Weise gemeinsam an dem vorliegenden Profilelement genutzt werden.

Das mehrschichte Kernteil erstreckt sich hierbei entlang der Längserstreckung des Schalenteils bzw. des Profilelements, wobei die einzelnen Werkstoffschichten quer zur Längserstreckung des Schalenteils bzw. des Profilelements nebeneinander angeordnet sind.

Um die Eigenschaften von Profilelementen zu verbessern, ist es aus dem Stand der Technik bereits bekannt, in eine Kammer eines Profilelements ein Kernteil einzuschieben. Bisher ist dieses Kernteil jedoch nur aus einem einzigen Werkstoff hergestellt, beispielsweise um die Festigkeit des Profilelements weiter zu erhöhen oder um Isoliereigenschaften des Profilelements zu verbessern. Beide Eigenschaften gemeinsam können bisher nicht oder nur in einem nicht ausreichenden Maß verbessert werden.

Ist ein derartiges Kernteil jedoch mehrschichtig ausgebildet, können vorteilhafte Eigenschaften unterschiedlicher Werkstoffe an einem Profilelement vorteilhaft miteinander verknüpft werden.

Deshalb sieht eine besonders vorteilhafte Verfahrensvariante vor, dass anschließend der seitlich zugängliche Hohlraum des Schalenteils mit wenigstens zwei Schichten an Werkstoffen mit unterschiedlichen Werkstoffeigenschaften gefüllt wird.

Um stetig steigenden Anforderungen an Festigkeits- und Steifigkeitseigenschaften sowie Wärmedämmungseigenschaften insbesondere an Türrahmen gerecht zu werden und derartige Türrahmen verfahrenstechnisch einfach herstellen zu können, wird die Profilschale bzw. das Schalenelement aus einem Guss hergestellt und idealerweise mit zwei Schichten aus unterschiedlichen Werkstoffen ausgefüllt.

Somit sieht eine weitere vorteilhafte Ausführungsvariante vorliegender Erfindung vor, dass eine erste Schicht des mehrschichtigen Kernteils aus einem Polyurethan-Schaum hergestellt ist. Insbesondere Polyurethan-Schaum kann auf Grund seiner geringeren Dichte besonders gute wärmeisolierende Eigenschaften haben, sodass diese erste Schicht die lsolationseigenschaften des Profilelements und damit auch eines hieraus hergestellten Rahmens wesentlich verbessern kann.

Herstellungstechnisch ist diese erste Schicht besonders einfach hergestellt, wenn in einem weiteren vorteilhaften Verfahrensschritt in den Hohlraum des Schalenteils eine erste Schicht aus einem Polyurethan-Schaum eingebracht wird. Hierdurch können die vorstehend erläuterten guten wärmeisolierenden Eigenschaften an dem Profilelement besonders einfach realisiert werden.

Darüber hinaus ist es vorteilhaft, wenn eine zweite Schicht des mehrschichtigen Kernteils aus einem Polyurethan-Hartschaum, vorzugsweise aus Purenit® oder vorzugsweise aus Baydur® oder speziell aus Baydur®60, hergestellt ist. Insbesondere Purenit® und Baydur®60 zeichnen sich durch außerordentlich gute Festigkeitseigenschaften aus und können daher dem Profilelement eine entscheidend verbesserte Steifigkeit verleihen. Die zweite Schicht kann damit eine stabilisierende Schicht sein. Purenit® zeichnet sich ferner durch eine geringe Zelligkeit aus, wodurch der zweiten Schicht weitere positive Eigenschaften zugeordnet werden können. So können Schrauben, die z.B. zur Befestigung von Beschlägen dienen können, in der zweiten Schicht verschraubt sein.

Insofern sieht eine weiterführende vorteilhafte Verfahrensvariante vor, dass in den Hohlraum des Schalenteils eine zweite Schicht aus einem Polyurethan-Hartschaum, vorzugsweise Purenit®, Baydur® oder speziell Baydur®60, eingebracht wird. Diese verbindet sich vorzugsweise unlösbar mit der ersten Schicht, wodurch das mehrschichtige Kernteil besonders einfach hergestellt werden kann.

Stabilisierende und/oder wärmeisolierende Schichten weisen vorzugsweise eine gewisse Mindestquerschnittsdicke auf und/oder ein gewisses Flächenträgheitsmoment. So ist vorzugsweise eine kleinste Querschnittserstreckung einer solchen Schicht nicht kleiner als die Hälfte der größten Querschnittserstreckung, wodurch ein gewisses Flächenträgheitsmoment hergestellt sein kann. Sehr flache Schichten hingegen können nur eine geringe Verwindungssteifigkeit aufweisen, und können daher insbesondere nicht als stabilisierende Schicht angesehen werden.

An dieser Stelle sei explizit darauf hingewiesen, dass selbst herkömmliche Profilelemente alleine schon mit den Merkmalen im Zusammenhang des mehrschichtigen Kernteils vorteilhaft weitergebildet werden können, sodass die Merkmale hinsichtlich des mehrschichtigen Kernteils auch ohne die übrigen Merkmale vorliegender Erfindung vorteilhaft sind.

Es versteht sich, dass das mit einem mehrschichtigen Kernteil versehene Schalenteil bereits ein Profilelement vorteilhaft ausgestalten kann. Wird das Schalenteil zusätzlich noch mit einem Deckelteil verschlossen, kann das Profilelement weiter vorteilhaft verstärkt werden.

Die erste Schicht des mehrteiligen Kernteils ist idealerweise eine äußere wärmedämmende Schicht, das heißt die einem Kaltbereich zugewandte Schicht, wodurch ein aus den vorliegenden Profilelementen gefertigter Rahmen den aktuellen und zukünftigen Anforderungen an eine Energieeinsparung insbesondere hinsichtlich Hausabschlusstüren besonders gut gerecht werden kann. Zum Bilden der ersten Schicht eignet sich insbesondere der hochwärmedämmende Polyurethan-Schaum, welcher zwar weniger belastungsfest ist, sich aber durch einen sehr geringeren Wärmeleitwert auszeichnet. Zudem kann der die erste Schicht bildende Polyurethan-Schaum vorteilhafter Weise auch zur Gewichtsreduzierung eines Rahmens beitragen.

Die zweite Schicht des mehrschichtigen Kernteils kann demzufolge eher eine innere Schicht des Profilelements bzw. des Rahmens bilden, und zeichnet sich vorzugsweise durch eine besonders gute Tragfestigkeit und Ausreißfestigkeit aus, kann also stabilisierend wirken. Insbesondere zur Aufnahme und Befestigung von Beschlagteilen, wie Türbändern, Schließblechen, Montageschrauben und dergleichen, ist es vorteilhaft, wenn das vorliegende Schalenteil im Bereich von Beschlägen ein Formteil aus Polyurethan-Hartschaum, Purenit® oder Baydur®60, aufweist. Diese Werkstoffe bieten einerseits eine dichte, kompakte Struktur, wodurch eine außergewöhnlich hohe Ausreißfestigkeit von Verschraubungen der Beschlagteile gewährleistet werden kann. Andererseits bieten diese Werkstoffe einen geschlossenzelligen Aufbau, welcher immer noch eine ausreichend schlechte Wärmeleitung gewährleisten kann. Alternativ kann die zweite Schicht auch mit einer Mischung aus Harz und Vulkanasche gegossen werden.

Die erste Schicht und die zweite Schicht können durch einen Steg, der sich durch den Hohlraum des Schalenteils erstreckt, voneinander getrennt sein. Der Steg kann sich dabei vollständig durch das Schalenteil erstrecken, so dass er als Auflage für das Deckelteil dient, durch den das Schalenteil an seiner offenen Seite oder rückseitig geschlossen werden kann. Der Steg kann durch eine Zwischenwandung gebildet sein. Der Steg kann, wie die Zwischenwandung, Teil eines mehrschichtigen Kernteils sein.

Das Deckelteil kann in einem bevorzugten Ausführungsbeispiel einstückig mit einer der Schichten, vorzugsweise mit der zweiten inneren und/oder der stabilisierenden Schicht, ausgebildet sein. Somit kann beispielsweise der Polyurethan-Hartschaum, der bevorzugt für die die zweite Schicht eingesetzt wird, auch den das Schalenteil abschließende Deckelteil ausbilden. Es kann sich eine weitere Verbesserung der Stabilität ergeben, wenn die stabilisierende Schicht zugleich das Profilelement als Deckelteil verschließen kann. Ferner kann sich ein vereinfachter Aufbau sowie eine vereinfachte Montage ergeben, da die Anzahl der zu montierenden Teile reduziert werden kann.

Vorzugsweise basieren Teile des Profilelements, nämlich zumindest ein Schalenteil, eine erste Schicht und eine zweite Schicht auf demselben Kunststoff, insbesondere auf Polyurethan. Es ist weiter vorteilhaft, wenn auch das Deckelteil auf demselben Kunststoff basiert. Unter "auf dem selben Kunststoff basieren" ist insbesondere gemeint, dass die verwendeten Werkstoffe jeweils zu einem Gewichtsanteil von mehr als 50%, insbesondere mehr als 80% aus demselben Stoff gebildet sind. Hierdurch können sich die einzelnen Teile verbessert stoffschlüssig miteinander verbinden lassen.

Ist zusätzlich in das Profilelement wenigstens ein Befestigungskörper für Beschlagteile, wie Türbänder, Schließbleche, Montageschrauben oder dergleichen integriert, kann an einem Rahmen, welcher aus vorliegenden Profilelementen gefertigt ist, besonders betriebssicher selbst ein sehr schweres Türblatt angeschlagen werden.

An besonders belastungsrelevanten Bereichen des Rahmens können zur Verstärkung des Profilelements entsprechende Befestigungskörper bzw. Harzkörper bzw. sonstige Verstärkungskörper etwa durch einen Harzeinguss eingesetzt werden. Diese können gut zur außergewöhnlich massiven Befestigung, beispielsweise von Beschlagteilen, sowie einer besonders festen Wandmontage des Rahmens dienen. Insofern ist es vorteilhaft, wenn der Befestigungskörper ein Formteil aus einem Harzeinguss ist.

Kumulativ ist es vorteilhaft, wenn das Profilelement eine Beplankung, vorzugsweise aus einem Aluminium oder aus einer Legierung hiervon, aufweist. Das Profilelement kann einerseits optisch vielfältig gestaltet und andererseits zusätzlich vor äußeren Belastungen geschützt werden, wenn es mit einer entsprechenden Beplankung versehen ist. Die Beplankung kann hierbei beispielsweise aufgeklebt und/oder aufgeklipst werden.

Darüber hinaus kann eine Tür neben dem vorteilhaften Rahmen aus erfindungsgemäßen Profilelementen auch von einem Paneelelement zum Fertigen eines Türblatts, insbesondere für Haus- oder Wohnungsabschlusstüren, vorteilhaft weitergebildet werden, wenn das Paneelelement zwei Flächenelemente aus einem glasfaserverstärkten Kunststoff, ein Kernelement aus einem Werkstoff mit einer geringeren Dichte und einem Falzelement mit einer höheren Dichte aufweist, bei welchem das Kernelement zwischen den beiden Flächenelementen und das Falzelement um das Kernelement herum angeordnet ist. Ein Ziel ist es hierbei, den steigenden Anforderungen der Energieeinsparung gerecht zu werden und ein Paneelelement mit einem schlechten Wärmeleitwert und damit mit guten wärmeisolierenden Eigenschaften zu entwickeln.

Durch eine Veränderung in der Gesamtstärke und mit einem Einbringen von schallisolierenden Materialien, lassen sich diese Paneelelemente auch als Wohnungsabschlusstüren gut einsetzen.

Diese können je nach Ausführung der vorgesehenen Falzgeometrie in einem Neubau sowie hinsichtlich einer Sanierung eines Altbestandes gut eingesetzt werden. Beispielsweise können hierbei bereits oftmals eingegossene Stahlzargen im Bestand erhalten bleiben, indem nur die vorhandenen Türblätter gegen das vorliegende vorteilhafte Paneelelement ausgetauscht werden.

Weitere Variationen mit Sanierungszargen, welche die bestehenden Stahlzargen überdecken können, sind ebenso möglich.

Beispielsweise besteht das Paneelelement aus einer beidseitigen, ca. 2 mm oder 3 mm starken glasfaserverstärkten Kunststoffdeckschicht, einer umlaufenden, angegossenen oder eingeklebten Polyurethan-Falzkontur und einem wärmedämmenden Polyurethan-Schaumkern.

Insofern sieht eine besonders vorteilhafte Ausführungsvariante hinsichtlich des vorliegenden Paneelelements auch vor, dass das Kernelement aus einem Polyurethan-Schaum und das Falzelement aus einem Polyurethan-Hartschaum, vorzugsweise aus Purenit®, Baydur® oder speziell aus Baydur®60, hergestellt sind.

Beide Polyurethan-Schäume unterscheiden sich in ihrer Dichte. Der Polyurethan-Falz ist in seiner Dichte wesentlich schwerer, dadurch auch stabiler und ausreißfester als der wärmedämmende Polyurethan-Schaumkern innerhalb des Paneelelements.

Die Oberfläche des Paneelelements und die Falzaußenkontur können in vorteilhafter Weise zudem mit einer Gelcoat-Schicht überzogen werden, um so eine besonders glatte Oberfläche hinsichtlich des Paneelelements zu erhalten.

Durch die Bautiefe des Paneelelements und die eingesetzten Werkstoffe mit hervorragend isolierenden Eigenschaften entsteht idealerweise ein Füllungsflügel en block, der mit den entsprechenden Beschlägen an einem Rahmen, insbesondere an dem erfindungsgemäßen Rahmen, angeschlagen werden kann.

Mittels des angegossenen oder eingeklebten Polyurethan-Falzes lassen sich unterschiedliche Falzkonturen entsprechend dem Türsystem problemlos angleichen.

Ebenso lassen sich Dichtungsnuten eingießen bzw. einfräsen und je nach Falzüberschlag entsprechende Bandsysteme vorteilhaft einsetzen.

An einem derartigen Polyurethan-Falz können durch die hohe Dichte des Materials und der guten Ausreißfestigkeit Schlösser, Türbänder, Aushebelsicherungen und andere Beschlagteile besonders sicher verschraubt werden.

Speziell der Bereich um das Türschloss hierum kann von dem Polyurethan-Falz vorteilhafter Weise großräumig eingefasst werden, damit Beschläge, wie Langschildgarnituren, Türdrücker und Griffe, massiv an dem Paneelelement angeschraubt werden können, ohne hierbei das Paneelelement zu quetschen.

Darüber hinaus können durch Einfräsung von Ausschnitten in das vorliegende Paneelelement vorteilhafter Weise auch Isoliergläser oder dergleichen eingesetzt oder eingepresst werden.

Eine weitere vorteilhafte Ausführungsvariante sieht vor, dass das Paneelelement wenigstens ein Dickschichtelement, vorzugsweise aus einem Aluminium oder aus einer Legierung hiervon, aufweist. Hierdurch kann das vorhandene Flächenelement mit einer einseitig oder auch beidseitigen Aluminiumdeckschicht oder ähnlichen Deckschichten beplankt werden. Die Deckschichtelemente können auch hierbei beispielsweise aufgeklebt und/oder aufgeklipst werden.

Die alternativen Deckschichtelemente können dekorativen Oberflächen dienen und sie können in Stärken von 0,5 mm bis 1 mm aufgeklebt werden, um auch hier einem Verzug (Bimetalleffekt) durch die Materialausdehnung bei Wärmeeinstrahlung entgegenwirken zu können.

Der Vollständigkeit halber sei an dieser Stelle noch darauf hingewiesen, dass die Aufgabe der Erfindung auch von einer Tür, insbesondere von einer Haus-oder Wohnungsabschlusstür, mit einem Türrahmen gelöst wird, wobei sich die Tür durch das hier beschriebene Profilelement, den hier beschriebenen Türrahmen und/oder auch durch das hier beschriebene Paneelelement auszeichnet.

Die Erfindung kann auch durch folgende Gegenstände oder Verfahren dargestellt werden:
1. Profilelement (1, 2; 34) zum Fertigen eines mehrere Profilelemente (1, 2; 34) umfassenden Türrahmens (3) oder dergleichen, wobei das Profilelement mehrere Profilwandungen aufweist, **dadurch gekennzeichnet, dass** das Profilelement (1, 2; 34) zwei einen Winkel einschließende Schenkel (4, 5) aufweist, welche in einem Eckbereich miteinander verbunden sind, wobei sich zumindest eine Profilwandung von Schenkel (4) zu Schenkel (5) nahtlos und/oder fugenlos über den Eckbereich erstreckt.
2. Profilelement nach Gegenstand 1, **dadurch gekennzeichnet, dass** das Profilelement ein Schalenteil (22; 35) und ein Deckelteil (23; 36) umfasst, wobei sich das Schalenteil und/oder der Deckelteil nahtlos oder fugenlos über den Eckbereich erstreckt.
3. Profilelement (1, 2; 34) nach Gegenstand 1 oder 2, **dadurch gekennzeichnet, dass** das Profilelement (1, 2; 34) zwei rechtwinklig (11) zueinander angeordnete Schenkel (4, 5) aufweist.
4. Profilelement (1, 2; 34) nach einem der Gegenstände 1 bis 3, **dadurch gekennzeichnet, dass** das Profilelement (1, 2; 34) L-förmig ausgestaltet ist.
5. Profilelement (1, 2; 34) nach einem der Gegenstände 1 bis 4, **dadurch gekennzeichnet, dass** das Schalenteil (22; 35) und/oder das Deckelteil (23; 36) einem faserverstärkten Kunststoff hergestellt sind.
6. Profilelement (1, 2; 34) nach einem der Gegenstände 1 bis 5, **dadurch gekennzeichnet, dass** Bereiche (24, 25) des Profilelements (1, 2; 34), insbesondere das Schalenteil (22; 35) und/oder das Deckelteil (23; 36) des Profilelements (1, 2; 34), aus einem Sheet-Molding-Compound (SMC), einem Bulk-Molding-Compound (BMC) oder einem Handlaminat hergestellt sind.
7. Profilelement (1, 2; 34) nach einem der Gegenstände 1 bis 6, **dadurch gekennzeichnet, dass** das Profilelement (1, 2; 34) ein mehrschichtiges Kernteil (37) aufweist.
8. Profilelement (1, 2; 34) nach Gegenstand 7, **dadurch gekennzeichnet, dass** eine erste Schicht (38) des mehrschichtigen Kernteils (37) aus einem Polyurethan-Schaum hergestellt ist.
9. Profilelement (1, 2; 34) nach Gegestand 7 oder 8, **dadurch gekennzeichnet, dass** eine zweite Schicht (39) des mehrschichtigen Kernteils aus einem Polyurethan-Hartschaum, vorzugsweise aus Baydur® oder speziell aus Baydur® 60, hergestellt ist.
10. Profilelement (1, 2; 34) nach einem der Gegenstände 1 bis 9, **dadurch gekennzeichnet, dass** in das Profilelement (1, 2; 34) wenigstens ein Befestigungskörper für Beschlagteile, wie Türbänder, Schließbleche, Montageschrauben oder dergleichen, integriert ist.
11. Profilelement (1, 2; 34) nach einem der Gegenstände 1 bis 10, **dadurch gekennzeichnet, dass** das Profilelement (1, 2; 34) zusätzlich eine Beplankung (52, 53), vorzugsweise aus einem Aluminium oder aus einer Legierung hiervon, aufweist.
12. Türrahmen (3; 32) oder dergleichen, insbesondere für Haus- oder Wohnungsabschlusstüren (31; 51), aus wenigstens zwei miteinander verbundenen Profilelementen (1, 2; 34), **dadurch gekennzeichnet, dass** der Türrahmen (3; 32) in seinen Eckbereichen gehrungsfrei und/oder stoßkantenfrei ausgestaltet ist.
13. Türrahmen (3; 32) nach Gegenstand 12, **gekennzeichnet durch** Profilelemente (1, 2; 34) nach einem der Gegenstände 1 bis 11.
14. Türrahmen (3; 32) nach Gegenstand 12 oder 13, **dadurch gekennzeichnet, dass** der Türrahmen (3; 32) lediglich aus zwei Profilelementen (1, 2; 34) gebildet ist, wobei ein rechtes Profilelement (1) und ein linkes Profilelement (2) spiegelverkehrt ausgestaltet sind.
15. Tür (30; 50), insbesondere Haus- oder Wohnungsabschlusstür (31; 51), mit einem Türrahmen (3; 32), **gekennzeichnet durch** Profilelemente (1, 2; 34) nach einem der Gegenstände 1 bis 11.
16. Verfahren zum Herstellen eines Profilelements (1, 2; 34) zum Fertigen eines Türrahmens (3; 32) oder dergleichen, insbesondere zum Herstellen eines Profilelements nach einem der Ansprüche 1 bis 11, **dadurch gekennzeichnet, dass** für das Profilelement (1, 2; 34) ein Schalenteil (22; 35) mit einem seitlich zugänglichen Hohlraum (26) hergestellt wird.
17. Verfahren nach Verfahren 16, **dadurch gekennzeichnet, dass** anschließend der seitlich zugängliche Hohlraum (26) des Schalenteils (22; 35) mit wenigstens zwei Schichten (38, 39) an Werkstoffen mit unterschiedlichen Werkstoffeigenschaften gefüllt wird.
18. Verfahren nach Verfahren 16 oder 17, **dadurch gekennzeichnet, das**s das Schalenteil (22; 35) mittels eines Sheet-Molding-Compound-Verfahrens hergestellt wird.
19. Verfahren nach Verfahren 16 oder 17, **dadurch gekennzeichnet, dass** das Schalenteil (22; 35) mittels eines Bulk-Molding-Compound-Verfahrens hergestellt wird.
20. Verfahren nach Verfahren 16 oder 17, **dadurch gekennzeichnet, dass** das Schalenteil (22; 35) mittels eines Handlaminat-Verfahrens hergestellt wird.
21. Verfahren nach einem der Verfahren 16 bis 20, **dadurch gekennzeichnet, dass** in den Hohlraum (26) des Schalenteils (22; 35) eine erste Schicht (38) aus einem Polyurethan-Schaum eingebracht wird.
22. Verfahren nach einem der Verfahren 16 bis 21, **dadurch gekennzeichnet, dass** in den Hohlraum (26) des Schalenteils (22; 35) eine zweite Schicht (39) aus einem Polyurethan-Hartschaum, vorzugsweise aus Baydur® oder speziell aus Baydur® 60, eingebracht wird.
23. Verfahren nach einem der Verfahren 16 bis 22, **dadurch gekennzeichnet, dass** das Schalenteil (22; 35) mit einem Deckelteil (23; 36) verschlossen wird.

Weitere Vorteile, Ziele und Eigenschaften vorliegender Erfindung werden anhand nachfolgender Beschreibung anliegender Zeichnung erläutert, in welcher beispielhaft Profilelemente und Paneelelemente von Türen dargestellt sind. Es zeigen:
- Figur 1: schematisch eine Ansicht zweier erfindungsgemäßer Profilelemente, welche noch nicht zu einem Türrahmen zusammengefügt sind;
- Figur 2: schematisch einen Querschnitt entlang der Schnittlinie A-A durch einen langen Schenkel des linken der beiden Profilelemente aus der Figur 1;
- Figur 3: schematisch einen Querschnitt durch ein weiteres erfindungsgemäßes Profilelement eines Türrahmens, an welchem ein Paneelelement angeschlagen ist;
- Figur 4: schematisch einen Querschnitt durch ein alternatives Profilelement sowie ein alternatives Paneelelement, welche jeweils mit einer Aluminiumaußenhaut versehen sind; und
- Figur 5: schematisch einen Querschnitt durch ein weiteres erfindungsgemäßes Profilelement eines Türrahmens, an welchem ein Paneelelement angeschlagen ist.

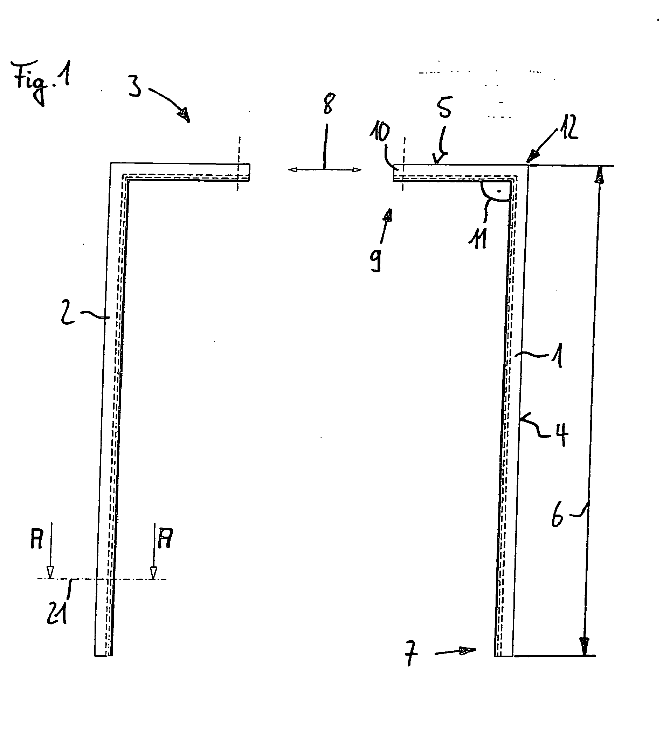

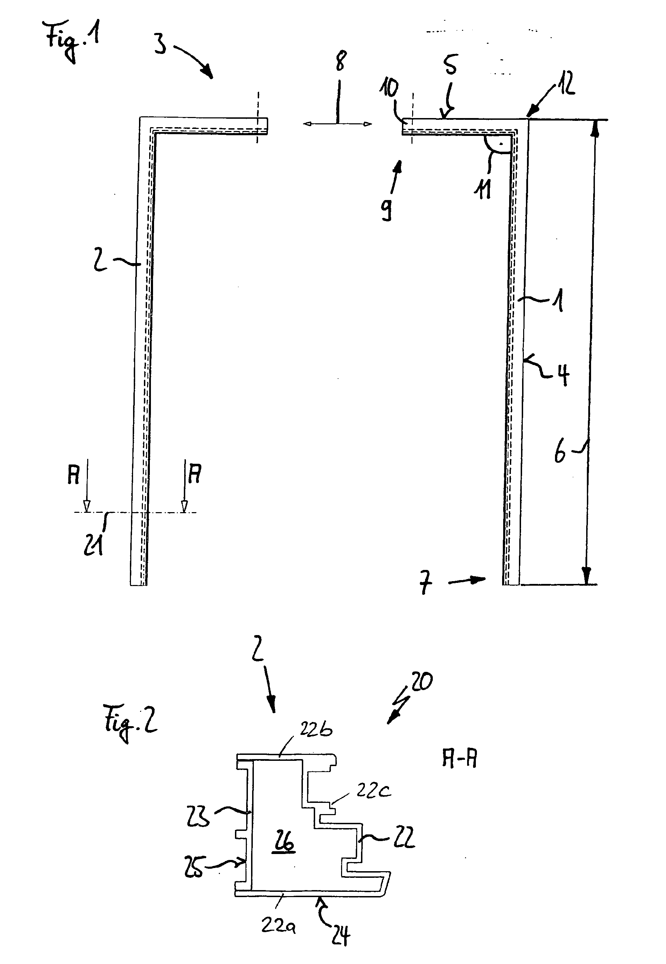

Das in der Figur 1 gezeigte rechte Profilelement 1 und das linke Profilelement 2 sind spiegelverkehrt zueinander ausgestaltet, haben ansonsten jedoch einen identischen Aufbau. Insofern können die beiden Profilelemente 1 und 2 in einem zusammengefügten Zustand (hier nicht dargestellt) sogleich einen vorteilhaft besonders verwindungssteifen und festen Türrahmen 3 bilden.

Der besonders verwindungssteife und feste Türrahmen 3 kann dadurch erzielt werden, indem jeder der Profilelemente 1 bzw. 2 zwei unterschiedlich zueinander orientierte Schenkel 4 und 5 aufweist (hier nur hinsichtlich des rechten Schenkels 1 beschrieben und beziffert). Gut zu erkennen ist, dass der vertikal verlaufende Schenkel 4 länger als der horizontal verlaufende Schenkel 5 ausgebildet ist.

Mittels des vertikal verlaufenden Schenkels 4 kann eine Rahmenhöhe 6 des Türrahmens 3 angepasst werden, indem der vertikal verlaufende Schenkel 4 an seinem bodenseitigen Ende 7 entsprechend abgelängt werden kann.

Dementsprechend kann eine Türrahmenbreite 8 problemlos durch Anpassen des horizontal verlaufenden Schenkels 5, beispielsweise des rechten Profilelements 1 und/oder des linken Profilelements 2, eingestellt werden. Hierzu kann etwa der horizontal verlaufende Schenkel 5 des rechten Profilelements 1 an seinem stoßseitigen Ende 9 entsprechend eingekürzt werden.

Um beide Profilelemente 1 und 2 sehr innig miteinander zu dem Türrahmen 3 verbinden zu können, ist an dem stoßseitigen Ende 9 ein Überlappungsbereich 10 von ca. 50 mm vorgesehen, über welchen die beiden Profilelemente 1 und 2 gut miteinander gekoppelt werden können. Der Überlappungsbereich 10 stellt einen Verbindungsbereich dar, an dem die beiden Profilelemente 1, 2 miteinander verbundnen werden. Am fertigen Türahmen ist der Verbindungsbereich mittig angeordnet.

In diesem Ausführungsbeispiel weisen der vertikal verlaufende Schenkel 4 eine Länge von 2450 mm und der horizontal verlaufende Schenkel 5 eine Länge von 650 mm auf. Der vertikal verlaufende Schenkel 4 und der horizontal verlaufende Schenkel 5 sind rechtwinklig zueinander angeordnet, sodass die Profilelemente 1 bzw. 2 auf Grund ihrer unterschiedlich lang ausgebildeten Schenkel 4 und 5 als L-förmig bezeichnet werden können.

Die beiden Schenkel 4 und 5 gehen in ihren gemeinsamen Eckbereich 12 nahtlos ineinander über, wodurch das jeweilige Profilelement 1 bzw. 2 eine außergewöhnlich gute Steifigkeit erhält. Insofern sind die Profilelemente 1 und 2 jeweils gehrungsfrei ausgestaltet, wodurch die Gefahr einer unbeabsichtigten Spaltbildung im Eckbereich 12 verhindert ist.

In der hinsichtlich der Figur 2 gezeigten Schnittdarstellung 20 des Schnittes A-A entlang der Schnittlinie 21 ist gut zu erkennen, dass das Profilelement 1 bzw. 2 ein Schalenteil 22 und ein Deckelteil 23 aufweist. Sowohl das Schalenteil 22 als auch das Deckelteil 23 sind in diesem Ausführungsbeispiel aus einem faserverstärkten Kunststoff hergestellt, der ein Sheet-Molding-Compound, ein Bulk-Molding-Compound oder ein Handlaminat sein kann. Somit sind zumindest Bereiche 24 bzw. 25 des jeweiligen Profilelements 1 bzw. 2 mittels eines Sheet-Molding-Compound-Verfahrens, eines Bulk-Molding-Compound-Verfahrens oder eines Handlaminat-Verfahrens herstellbar.

Das Schalenteil 22 setzt sich aus mehreren Profilwandungen 22a, 22b und 22c zusammen, wobei die Profilwandungen 22a, 22b zueinander parallel verlaufen. Verbunden sind die Profilwandungen 22a, 22b durch die abgestufte Profilwandung 22c, die sich wiederum aus mehreren kleineren Profiwandungen oder Profilwandabschnitten zusammensetzt. Das Schalenteil 22 ist U-förmig ausgebildet, wobei die Profilwandung 22c die Basis des U's darstellt. Die Profilwandungen 22a, 22b und 22c erstrecken sich ohne Naht oder Unterbrechung von dem vertikal verlaufenden Schenkel 4 über den Eckbereich 12 zum horizontal verlaufenden Schenkel 5.

Der Deckelteil 23 des Profilelements 1 bzw. 2 kann hierbei in das Schalenteil 22 des Profilelements 1 bzw. 2 eingelegt werden und das Schalenteil 22 und das Deckelteil 23 können verpresst, verklebt oder sonst wie miteinander verbunden werden.

Vorteilhafter Weise können die Profilelemente 1 und 2 in dem jeweiligen Eckbereich 12 mittels der vorstehend genannten Verfahren nicht nur mit zwei rechtwinklig 11 zueinander angeordneten Schenkeln 4 und 5 nahtlos hergestellt sein. Vielmehr können das Schalenteil 22 und das Deckelteil 23 nahezu mit beliebig unterschiedlichen Geometrien hergestellt sein.

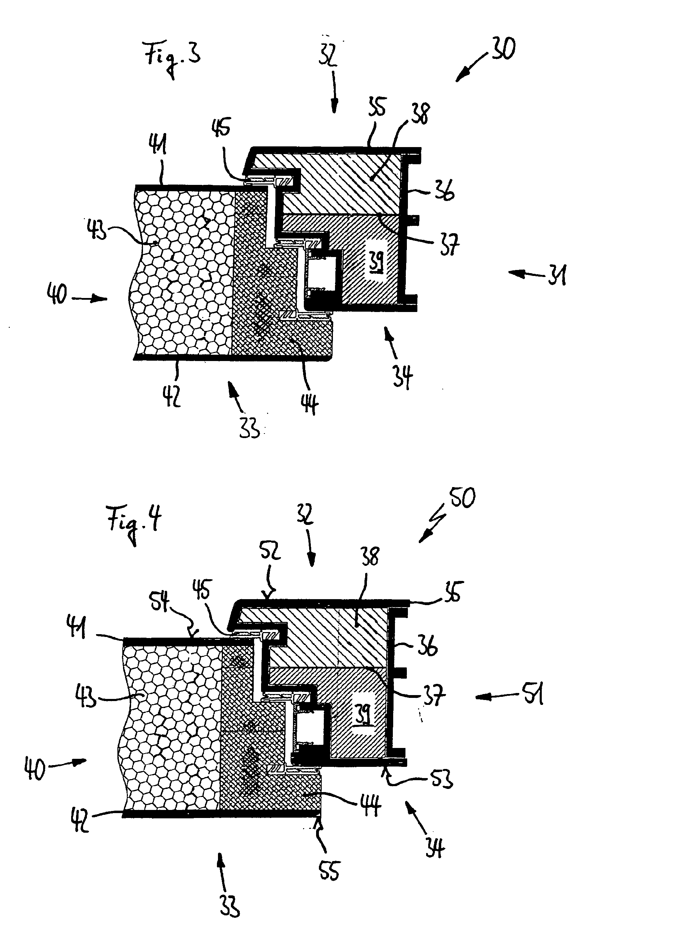

Bei der in der Figur 3 ausschnittsweise gezeigten Tür 30 handelt es sich um eine Wohnungseingangstür 31 mit einem Türrahmen 32 und einem Türblatt 33, welches an dem Türrahmen 32 angeschlagen ist.

Der Türrahmen 32 ist auch in diesem Ausführungsbeispiel aus L-förmig gestalteten Profilelementen 34 gefertigt, wobei diese L-förmigen Profilelemente 34 jeweils ein Schalenteil 35 und ein Deckelteil 36 umfassen.

Die L-förmigen Profilelemente 34 besitzen ein mehrschichtiges Kernteil 37, wobei eine erste Schicht 38, nämlich eine wärmedämmende Schicht, aus einem Polyurethan-Schaum und eine zweite Schicht 39, nämlich eine stabilisierende Schicht, aus Purenit® oder Baydur®60 hergestellt sind.

Durch dieses mehrschichtige Kernteil 37 erfahren die Profilelemente 34 der Tür 30 besonders vorteilhafte Eigenschaften. Die erste Schicht 38 aus Polyurethan-Schaum hat hierbei besonders gute wärmeisolierende Eigenschaften, während die zweite Schicht 39 aus Purenit® Baydur®60 die Profilelemente 34 weiter versteifen kann. Die zweite Schicht stellt somit eine stabilisierende Schicht dar. Zudem können im Bereich des Purenti® oder Baydur®60, also an der stabilisierenden Schicht, Befestigungskomponenten für Beschlagteile besonders ausreißfest an dem Türrahmen 32 befestigt werden.

Das hier gezeigte Türblatt 33 wird von einem Paneelelement 40 gebildet, welches ein erstes Flächenelement 41, ein zweites Flächenelement 42, einen Polyurethan-Schaumkern 43 und eine Polyurethan-Hartschaum-Falz 44 aufweist. Die Polyurethan-Hartschaum-Falz 44 ist an den Polyurethan-Schaum-Kern 43 angegossen und bildet einen umlaufenden harten Abschluss des Paneelelements 40, wobei in die Polyurethan-Hartschaum-Falz 44 vorteilhafter Weise beliebige Konturen eingefräst werden können.

An dem Türrahmen 32 bzw. an dem Türblatt 33 sind noch diverse Dichtungselemente 45 (hier nur beispielhaft beziffert) befestigt, sodass die Tür 30 insgesamt dicht verschlossen werden kann.

Bei der in der Figur 4 lediglich teilweise gezeigten Tür 50 handelt es sich um eine Hausabschlusstür 51, welche nahezu einen identischen Aufbau aufweist, wie die Wohnungseingangstür 31 aus der Figur 3. Insofern werden für gleiche Bauteile auch identische Bezugszeichen verwendet.

Die in der Figur 4 gezeigte Hausabschlusstür 51 zeichnet sich jedoch zusätzlich einerseits durch eine Aluminium-Beplankung aus einer äußeren Aluminiumdeckschale 52 und einer inneren Aluminiumdeckschale 53 aus, durch welche der Türrahmen 32 zusätzlich verstärkt ist.

Auch das Paneelelement 40 weist eine derartige Aluminium-Beplankung aus einem äußeren Aluminiumdeckblech 54 und einem inneren Aluminiumdeckblech 55 auf, wodurch das Türblatt 33 nochmals verstärkt ist.

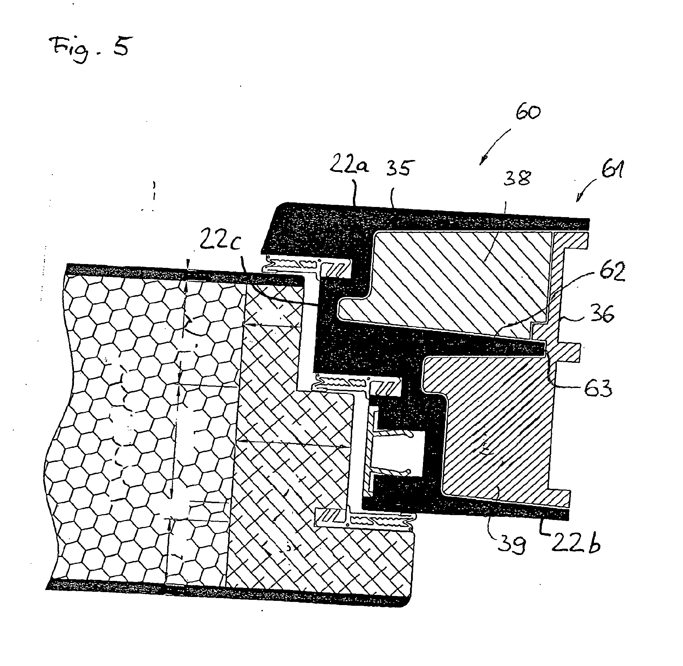

Ein weiteres Ausführungsbeispiel der Erfindung zeigt Figur 5 mit einer mit 60 bezeichneten Tür, die als Hausabschlusstür 61 ausgebildet ist. Für ähnliche oder identische Bauteile werden gleiche Bezugszeichen verwendet und es wird auf die entsprechende Beschreibung bezüglich der vorherigen Figuren verwiesen.

Ein Schalenteil 35 weist einen Steg 62 als Zwischenwandung auf, der den Hohlraum des U-förmigen Schalenteils 35 in zwei Bereiche teilt und die beiden Schichten 38, 39 voneinander trennt. Hierdurch wird eine doppelte U-Form des Schalenteils 35 erreicht. Der Steg 62 bildet mit einem äußeren Ende 63 eine Auflage für ein Deckelteil 36. Im Gegensatz zu den anderen Ausführungsbeispielen ist das Deckelteil 36 einstückig mit der zweiten Schicht 39 ausgebildet. Somit kann auf das ansonsten separat gefertigte Deckelteil verzichtet werden. Durch das Einsetzen der zweiten Schicht 39, nämlich der stabilisierenden Schicht wird der Hohlraum verschlossen.

Die erste Schicht 38 kann als Formteil in den betreffenden Teil-Hohlraum des Schalenteils 35 eingesetzt und dort verklebt werden. Danach kann dann, ebenfalls als fertiges Formteil, die zweite Schicht 39 mit dem Deckelteil 36 eingesetzt werden, wodurch mit diesem Schritt das Schalenteil 35 geschlossen wird. In dieser Ausgestaltung kann das Profil mitsamt den Schichten zum Füllen im Wesentlichen aus drei Teilen hergestellt werden, wodurch der Aufbau des Profilelements vereinfacht ist, und zugleich eine hohe Stabilität aufweist. Ferner wird eine gute Wärmeisolation erzielt. Insbesondere wenn das Schalenteil und die zweite Schicht und vorzugsweise auch die erste Schicht auf demselben Kunststoff basieren, insbesondere Polyurethan, kann eine gute stoffschlüssige Verbindung zwischen den einzelnen Teilen hergestellt werden, die die Stabilität insgesamt erhöhen kann. Der Steg 62, der als Zwischenwandung auch Teil des mehrschichtigen Aufbaus des Kernelements mit den Schichten ist, kann ferner verhindern, dass mechanisch von außen durch die erste Schicht in die zweite stabilisierende Schicht gewaltsam (z.B. bei einem Einbruchsversuch) durchgedrungen wird. Dies kann die Einbruchsicherheit erhöhen.

An dieser Stelle sei explizit darauf hingewiesen, dass es sich bei den erläuterten Ausführungsbeispielen lediglich um erste Ausführungsbeispiele der Erfindung handelt, welche sich in keiner Weise einschränkend auf die vorliegende Erfindung auswirken.

Sämtliche in den Anmeldungsunterlagen offenbarten Merkmale können als erfindungswesentlich beansprucht werden, sofern sie einzeln oder in Kombination gegenüber dem Stand der Technik neu sind.

### Bezugszeichenliste

- 1: rechtes Profilelement
- 2: linkes Profilelement
- 3: Türrahmen
- 4: vertikal verlaufender Schenkel
- 5: horizontal verlaufender Schenkel
- 6: Türrahmenhöhe
- 7: bodenseitiges Ende
- 8: Türrahmenbreite
- 9: stoßseitiges Ende
- 10: Überlappungsbereich
- 11: rechtwinkelig
- 12: gemeinsamer Eckbereich

- 20: Schnittdarstellung
- 21: Schnittlinie
- 22: Schalenteil
- 23: Deckelteil
- 24: erster Bereich
- 25: weiterer Bereich
- 26: Hohlraum

- 30: Tür
- 31: Wohnungseingangstür
- 32: Türrahmen
- 33: Türblatt
- 34: L-förmige Profilelemente
- 35: Schalenteil
- 36: Deckelteil
- 37: mehrschichtiges Kernteil
- 38: erste Schicht
- 39: zweite Schicht
- 40: Paneelelement
- 41: erstes Flächenelement
- 42: zweites Flächenelement
- 43: Polyurethan-Schaum-Kern
- 44: Polyurethan-Hartschaum-Falz
- 45: Dichtungselement

- 50: weitere Tür
- 51: Hausabschlusstür
- 52: äußere Aluminium-Deckschale
- 53: innere Aluminium-Deckschale
- 54: äußeres Aluminium-Deckblech
- 55: inneres Aluminium-Deckblech

- 60: weitere Tür
- 61: Hausabschlusstür
- 62: Steg
- 63: Ende

## Patentansprüche

1. Profilelement (1, 2, 34) zum Fertigen, insbesondere eines ein oder mehrere Profilelemente (1, 2, 34) umfassenden Tür- oder Fensterrahmens (3) oder dergleichen, wobei das Profilelement mehrere Profilwandungen aufweist, **dadurch gekennzeichnet, dass** das Profilelement (1, 2, 34) zwei einen Winkel einschließende Schenkel (4, 5) aufweist, welche in einem Eckbereich miteinander verbunden sind, wobei sich zumindest eine Profilwandung von Schenkel (4) zu Schenkel (5) nahtlos und/oder fugenlos über den Eckbereich erstreckt.

2. Profilelement nach Anspruch 1, **dadurch gekennzeichnet, dass** das Profilelement ein Schalenteil (22, 35) und ein Deckelteil (23, 36) umfasst, wobei sich das Schalenteil und/oder der Deckelteil nahtlos oder fugenlos über den Eckbereich erstreckt.

3. Profilelement nach Anspruch 2, **dadurch gekennzeichnet, dass** das Schalenteil (22, 35) im Wesentlichen U-förmig ausgebildet ist.

4. Profilelement nach Anspruch 2, **dadurch gekennzeichnet, dass** das U-förmige Schalenteil eine Zwischenwandung aufweist, die im Wesentlichen parallel zu seitlichen Wandungen des Schalenteils ausgerichtet ist.

5. Profilelement (1, 2, 34) nach einem der Ansprüche 1 bis 4, **dadurch gekennzeichnet, dass** das Profilelement (1, 2, 34) ein mehrschichtiges Kernteil (37) aufweist.

6. Profilelement (1, 2, 34) nach Anspruch 5, **dadurch gekennzeichnet, dass** eine erste Schicht (38) des mehrschichtigen Kernteils (37) aus einem Polyurethan-Schaum hergestellt ist.

7. Profilelement (1, 2, 34) nach Anspruch 5 oder 6, **dadurch gekennzeichnet, dass** eine zweite Schicht (39) des mehrschichtigen Kernteils aus einem Polyurethan-Hartschaum hergestellt ist.

8. Profilelemente (1, 2, 34) nach einem der Ansprüche 5 bis 7 und Anspruch 2, **dadurch gekennzeichnet, dass** das Deckelteil (23, 36) einstückig mit einer der Schichten des mehrschichtigen Kernteils ausgebildet ist.

9. Profilelement nach einem der Ansprüche 1 bis 8, **dadurch gekennzeichnet, dass** zumindest ein Schalenteil, eine erste Schicht und eine zweite Schicht auf demselben Kunststoff basieren, insbesondere auf Polyurethan basieren.

10. Rahmen, insbesondere Tür- oder Fensterrahmen oder dergleichen, umfassend zumindest ein Profilelement (1, 2, 34) nach einem der Ansprüche 1 bis 9.

11. Tür (30; 50), insbesondere Haus- oder Wohnungsabschlusstür (31, 51), mit einem Türrahmen (3, 32), **gekennzeichnet durch** Profilelemente (1, 2, 34) nach einem der Ansprüche 1 bis 9.

12. Verfahren zum Herstellen eines Profilelements (1, 2, 34) zum Fertigen eines Tür- oder Fensterrahmens (3, 32) oder dergleichen, insbesondere zum Herstellen eines Profilelements nach einem der Ansprüche 1 bis 11, **dadurch gekennzeichnet, dass** für das Profilelement (1, 2, 34) ein Schalenteil (22, 35) mit einem seitlich zugänglichen Hohlraum (26) hergestellt wird.

13. Verfahren nach Anspruch 12, **dadurch gekennzeichnet, dass** anschließend der seitlich zugängliche Hohlraum (26) des Schalenteils (22, 35) mit wenigstens zwei Schichten (38, 39) an Werkstoffen mit unterschiedlichen Werkstoffeigenschaften gefüllt wird.

14. Verfahren nach Anspruch 13, **dadurch gekennzeichnet, dass** durch das Füllen des seitlich zugänglichen Hohlraums (26) mit einer der Schichten (38, 39) der seitliche Hohlraum (26) verschlossen wird, insbesondere vollständig verschlossen wird.

15. Verfahren nach einem der Ansprüche 12 bis 14, **dadurch gekennzeichnet, dass** das Schalenteil (22, 35) mittels eines Sheet-Molding-Compound-Verfahrens, eines Bulk-Molding-Compound-Verfahrens oder eines Handlaminat-Verfahrens hergestellt wird.
